# EUROPEAN PATENT SPECIFICATION

(11) **EP 3 451 157 B1**
(45) Date of publication and mention of the grant of the patent: **27.09.2023**
(21) Application number: 16899897.9
(22) Date of filing: 04.05.2016
(51) Int. Cl.: G06N 3/045, G06N 3/048, G06F 13/362, G06N 3/063, G06N 3/08

(54) **DEVICE AND METHOD FOR PERFORMING FORWARD OPERATION OF CONVOLUTIONAL NEURAL NETWORK**
VORRICHTUNG UND VERFAHREN ZUR DURCHFÜHRUNG EINES VORWÄRTSBETRIEBS EINES NEURONALEN FALTUNGSNETZES
DISPOSITIF ET PROCÉDÉ PERMETTANT D'EFFECTUER UNE EXPLOITATION SUIVANTE DE RÉSEAU NEURONAL CONVOLUTIF

(30) Priority: 29.04.2016 CN 201610282534
(43) Date of publication of application: 06.03.2019
(73) Proprietor: Cambricon Technologies Corporation Limited, Beijing 100190 (CN)
(72) Inventor: CHEN, Tianshi, Beijing 100190 (CN); HAN, Dong, Beijing 100190 (CN); CHEN, Yunji, Beijing 100190 (CN); LIU, Shaoli, Beijing 100190 (CN); GUO, Qi, Beijing 100190 (CN)
(74) Representative: AWA Sweden AB
(86) International application number: PCT/CN2016/080967
(87) International publication number: WO 2017/185386

(56) References cited:
- CN-A- 103 150 596
- CN-A- 104 809 426
- CN-A- 105 184 366
- US-A- 5 204 938
- Kalin Ovtcharov ET AL: "Accelerating deep convolutional neural networks using specialized hardware", Microsoft White Paper, 22 February 2015 (2015-02-22), XP055301505, Retrieved from the Internet: URL:https://web.archive.org/web/2015031812 3847/http://research.microsoft.com/pubs/24 0715/CNN%20Whitepaper.pdf [retrieved on 2016-09-09]
- CHEN YUNJI ET AL: "DaDianNao: A Machine-Learning Supercomputer", 2014 47TH ANNUAL IEEE/ACM INTERNATIONAL SYMPOSIUM ON MICROARCHITECTURE; [PROCEEDINGS OF THE ANNUAL ACM/IEEE INTERNATIONAL SYMPOSIUM ON MICROARCHITECTURE], IEEE COMPUTER SOCIETY, 1730 MASSACHUSETTS AVE., NW WASHINGTON, DC 20036-1992 USA, 13 December 2014 (2014-12-13), pages 609-622, XP032725058, ISSN: 1072-4451, DOI: 10.1109/MICRO.2014.58 ISBN: 978-0-7695-3047-5 [retrieved on 2015-01-15]
- SRIMAT CHAKRADHAR ET AL: "A dynamically configurable coprocessor for convolutional neural networks", PROCEEDINGS OF THE 37TH ANNUAL INTERNATIONAL SYMPOSIUM ON COMPUTER ARCHITECTURE, ISCA '10, ACM PRESS, NEW YORK, NEW YORK, USA, 19 June 2010 (2010-06-19), pages 247-257, XP058174461, DOI: 10.1145/1815961.1815993 ISBN: 978-1-4503-0053-7
- Venkata Nanda Kishore Buddhiraju: "Parallelized Convolution", , 19 December 2011 (2011-12-19), pages 1-20, XP055646530, Retrieved from the Internet: URL:https://cse.buffalo.edu/faculty/miller /Courses/CSE633/Venkata-Nanda-Kishore-Budd hiraju-Fall-2011.pdf [retrieved on 2019-11-26]

## Description

### Technical Field

The present invention generally relates to artificial neural networks, in particular, to a device and method for performing forward operation of convolutional neural network.

### Background

Convolutional neural network is an efficient recognition algorithm widely used in pattern recognition, image processing and other fields in recent years. It has the characteristics of simple structure, less training parameters, strong adaptability, translation, rotation and scaling. Since the feature detection layer of CNN/DNN learns from the training data, the displayed feature extraction is avoided while using CNN / DNN, and learning is performed implicitly from the training data; furthermore, since the weights of neuron in the same feature mapping plane are the same, the network can learn in parallel, which is also a great advantage of convolutional networks as compared with the network in which neurons are connected with each other.

In the field of existing computer applications, applications in relation to the convolution operation are very common. The present invention focuses on the convolutional neural network, wherein the current mainstream devices that can perform such operations are as follows:
In prior art, one known solution for performing convolutional neural network operations is to use a general purpose processor. This method performs general-purpose instructions through a general-purpose register file and general purpose functions to perform convolutional neural network operations. However, one of the disadvantages for this method is that a single general-purpose processor is used for scalar computation, which has low computational performance when performing convolutional neural network operations. When multiple general-purpose processors are used to perform in parallel, the mutual communication between general purpose processors may become a performance bottleneck.

In another prior art, a graphics processing unit (GPU) is used for vector calculations, wherein convolutional neural network operations are performed by using a generic register file and a generic stream processing unit to execute general SIMD instructions. However, in above solutions, the GPU on-chip buffer is too small and requires continuous off-chip data transfer during large-scale convolutional neural network operations. The off-chip bandwidth has become a major performance bottleneck.

An example of prior art may be seen in Kalin Ovtcharov et al: "Accelerating deep convolutional neural networks using specialized hardware" (2015-02-22).

### Summary of the Invention

### (1) Technical problem to be solved

The purpose of the present invention is to provide a device supporting convolutional neural networks so as to solve the problem of being limited to inter-chip communication and insufficient on-chip buffer for the prior art.

### (2) Technical solutions

One aspect of the present invention is to provide a device performing a forward operation of convolutional neural network, comprising an instruction storage unit, a controller unit, a data access unit, an interconnection module, a master operation module and a plurality of slave operation modules, wherein:
the instruction storage unit reads an instruction through the data access unit and stores the read instruction;
the controller unit reads the instruction from the instruction storage unit and translates it into a control signal for controlling the behavior of other modules, the other modules including the data access unit, the master operation module and the plurality of slave operation module;
the data access unit performs data or instruction read and write operation between the device and an address space external to the device;
the slave operation module is used to implement the convolution operation of an input data and a respective convolution kernel in convolutional neural network algorithm;
the interconnection module is used for the data transmission between the master and slave operation modules; wherein prior to the forward propagation of a connected layer of the neural network, the master operation module transfers the input data from the data access unit to every slave operation module through the interconnection module; and after the calculation of the slave operation module is completed, the interconnection module combines level by level the output scalar data of each slave operation module into an intermediate vector and transfers it back to the master operation module;
the master operation module splices the intermediate vectors of all the input data into an intermediate result and performs a subsequent operation on the intermediate results.

Another aspect of the present invention is to provide a method of performing a forward operation of a convolutional neural network.

An example of the present invention is to provide a method of performing a forward operation of a single layer convolutional neural network.

### (3) Beneficial effects

The device and supporting instructions for convolutional neural network operations provided by the present invention store temporarily the input data and convolution kernel involved in computation to the scratchpad memory. In the case of only sending the same instruction, the convolutional neural network operation unit can more flexibly and effectively support data of different widths and can solve the problem of the correlation in the data storage, thereby improving the execution performance that include a large number operation tasks of convolutional neural networks. The instructions employed by the present invention has a simplified format, which makes the instructions easy to use and the supported vector length be flexible.

The present invention can be applied to the following (including but not limited to) scenes: various electronics such as data processing, robot, computer, printer, screener, telephone, tablet, smart terminal, cell phone, tachograph, navigator, sensor, camera, cloud server, camera, video camera, projector, watch, headset, mobile storage, wearable device; various transportation tools such as plane, ship, vehicle; various household appliances such as TV, A/C, microwave, fridge, electric cooker, humidifier, washing machine, electric light, gas stove, range hood; and various medical equipments including nuclear magnetic resonance, B ultrasound, electrocardiograph.

### Brief Description of the Drawings

Fig. 1 is a schematic flow chart of convolutional neural network algorithm.
Fig. 2 is a schematic view of instructions for the device supporting the forward operation of convolutional neural network, according to the embodiments of the present invention.
Fig. 3 is a schematic block view of the overall structure of the device for performing the forward operation of convolutional neural network, according to the embodiments of the present invention.
Fig. 4 is a schematic view illustrating the structure of H tree module (an implementation of interconnection module) in the device for performing the forward operation of convolutional neural network, according to the embodiments of the present invention.
Fig. 5 is an example block view of the structure of the master operation module in the device for performing the forward operation of convolutional neural network, according to the embodiments of the present invention.
Fig. 6 is an example block view of the structure of the slave operation module in the device for performing the forward operation of convolutional neural network, according to the embodiments of the present invention.
Fig. 7 is an example block view of the forward operation process for the single layer of convolutional neural network, according to the embodiments of the present invention.

### Detailed Description of the Embodiments

The present invention provides a device and supporting instructions for convolutional neural network operations, comprising a storage unit, a register unit and a convolutional neural network operation unit, wherein the storage unit stores an input/output data and a convolution kernel therein, the register unit stores therein an address for storing the input/output data and convolution kernel, and the convolutional neural network operation unit obtains a data address from the register unit according to the convolutional neural network operation instruction, then obtains the corresponding input/output data and convolution kernel from the storage unit according to the data address, and then obtains the results of convolutional neural network operation through a convolutional neural network operation according to the obtained input data and convolution kernel. The present invention stores temporarily the input data and convolution kernel involved in operation into an external storage space (e.g. the scratchpad memory), which allows for more flexible and effective support of the data with different width during the convolutional neural network operation so that the execution performance that include a large number operation tasks of convolutional neural networks is improved.

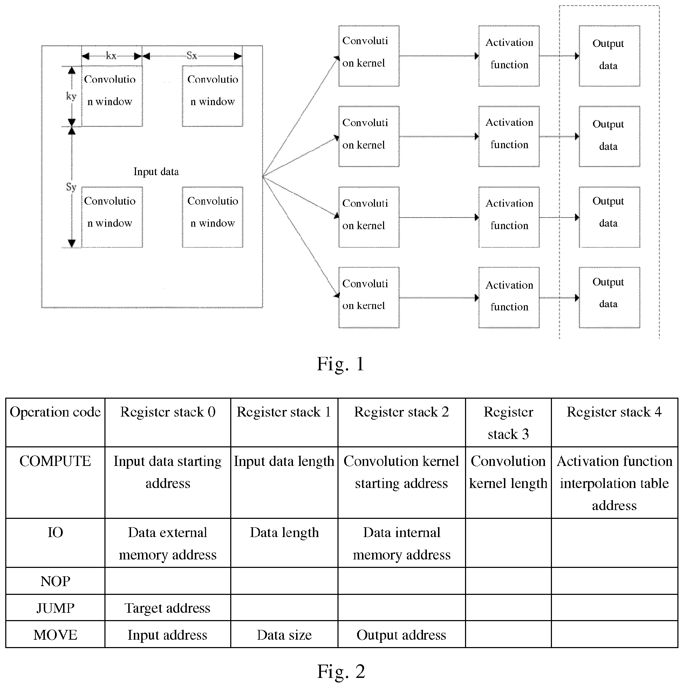

Fig. 1 is a view of convolutional neural network algorithm. As shown in Fig. 1, the convolutional neural network comprises a output data and activation function, an input data layer and a convolution kernel.

Firstly, during its every operation process, the corresponding input data *x*ᵢ needs to be selected from the input data layer at first according to the convolution window, and then the sum operation for the input data and the convolution kernel is conducted. The operation process of its input data is *s* = *s*(∑*wx*ᵢ + *b*), i.e. multiplying the convolution kernel *w* by the input data *x*ᵢ for summation, then adding the bias *b* to do the activation operation *s*(*h*) to obtain the final output data *s* . Among those, the multiplication for the convolution kernel and the input data is a vector multiplication.

According to the size *kₓ* of the convolution kernel in X axis and the size *k_{y}* in Y axis, the convolution window selects the input data with the same size as the convolution kernel from the very beginning on the basis of an input data with the dimension of X axis being W and that of Y axis being H, and then makes the first horizontal translation according to the shift vector *Sₓ* and *S_{y}* of the convolution window and then makes the vertical translation until the entire input data is transversed.

Fig. 2 is a schematic view of the format of the instruction set, according to the embodiments of the present invention. As shown in Fig. 2, the convolutional neural network operation instruction includes at least one operation code and at least one operation field, wherein the operation code is used to indicate the function of the convolutional neural network operation instruction and the convolutional neural network operation unit can perform convolutional neural network operation by identifying the operation code; the operation field is used to indicate the data information of the convolutional neural network operation instruction, wherein the data information may be an immediate or a register number including the start address and the data length of the input data, the start address and the data length of the convolution kernel, and the type of activation function.

The instruction set includes a convolutional neural network COMPUTE instruction with different functions and a CONFIG instruction, an IO instruction, a NOP instruction, a JUMP instruction and a MOVE instruction. In one embodiment, the COMPUTE instruction includes:
a convolutional neural network sigmoid instruction; according to this instruction, the device fetches an input data and a convolution kernel of specified sizes respectively from the designated address of the Scratchpad, performs a convolution operation in the convolution operation component, and then outputs the result for a sigmoid activation;
a convolutional neural network TanH instruction; according to this instruction, the device fetches an input data and a convolution kernel of specified sizes respectively from the designated address of the Scratchpad, performs a convolution operation in the convolution operation component, and then outputs the result for a TanH activation;
a convolutional neural network ReLU instruction; according to this instruction, the device fetches an input data and a convolution kernel of specified sizes respectively from the designated address of the Scratchpad, performs a convolution operation in the convolution operation component, and then outputs the result for a ReLU activation; and
a convolutional neural network group instruction; according to this instruction, the device fetches an input data and a convolution kernel of specified sizes respectively from the designated address of the Scratchpad, performs a convolution operation in the convolution operation component after dividing the group, and then outputs the result for activation.

The COMPUTE instruction also includes other operation instructions for a non-linear activation and a linear activation.

The COMPUTE instruction configures various constants required for the current layer operation before the operation for each layer of artificial neural network starts.

IO instruction allows for reading in the input data required in operation from the external memory space and storing the data back to the external space after the operation is completed.

The NOP instruction is responsible for clearing control signals in all control signal buffer queues in the current device to ensure that all instructions before the NOP instruction have been instructed. The NOP instruction itself does not contain any operations;
the JUMP instruction is responsible for controlling the jump of the next instruction address to be read from the instruction storage unit for the jump of the control flow;
the MOVE instruction is responsible for moving the data at a certain address space in the device's internal address space to another address in the device's internal address space. This process is independent of the operation unit and does not occupy the resources of the operation unit during operation.

In order that the objectives, technical schemes and advantages of the present invention will become more apparent, the present invention will be described in more detail with reference to the drawings and with combination of specific embodiments.

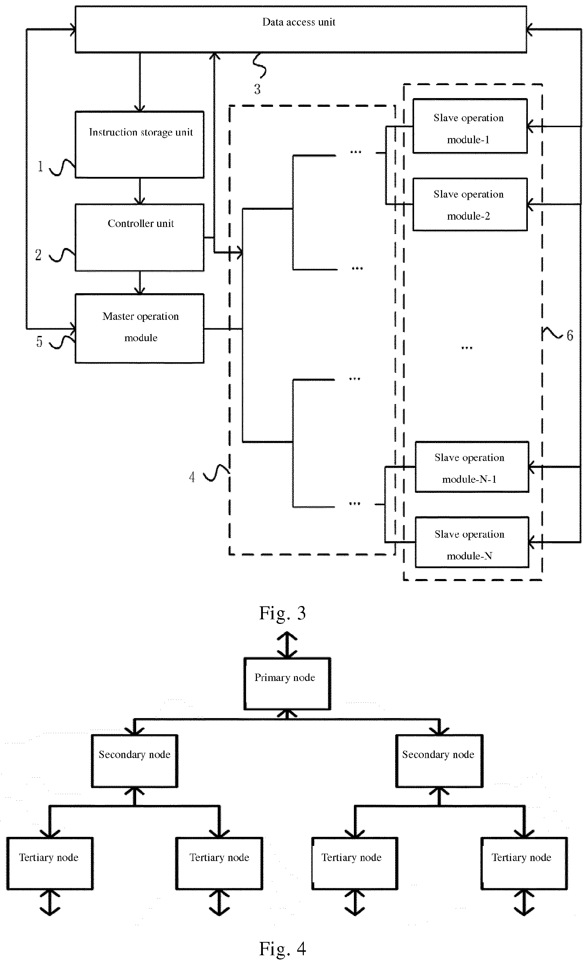

Fig. 3 is a schematic view of the structure of the device for the forward operation of convolutional neural network, provided by the embodiments of the present invention. As shown in Fig. 3, the device includes an instruction storage unit 1, a controller unit 2, a data access unit 3, an interconnection module 4, a master operation module 5 and a plurality of slave operation modules 6. The instruction storage unit 1, controller unit 2, data access unit 3, interconnection module 4, master operation module 5 and the plurality of slave operation modules 6 can implemented by a hardware circuit (e.g. including but not limited to FPGA, CGRA, ASICs, analog circuits and memristors).

The instruction storage unit 1 reads an instruction through the data access unit 3 and stores the read instruction.

The controller unit 2 reads the instruction from the instruction storage unit 1 and translates it into a control signal for controlling the behavior of other modules and sends to the other modules including the data access unit 3, the master operation module 5 and the plurality of slave operation module 6.

The data access unit 3 can access an external address space, and read and write the data to each storage unit in the device for completing the loading and storage of the data.

The interconnection module 4 is used to connect the master operation module and the slave operation module, and can implement different interconnection topologies (such as tree structure, ring structure, grid structure, hierarchical interconnect, bus structure).

Fig. 4 illustrates one embodiment of the interconnection module 4: H tree module. The interconnection module 4 constitutes a data path between the master operation module 5 and the plurality of slave operation modules 6 and is a binary tree path formed by a plurality of nodes. Each node equally sends the upstream data to two downstream nodes, merges the data returned by the two downstream nodes and returned them to the upstream nodes. For example, in the phase of starting the operation of the convolutional neural network, the neuron data in the master operation module 5 is sent to each slave operation module 6 through the interconnection module 4; when the operation process of the slave operation module 6 is completed, the value of each of the neurons output from each operation module is spliced level by level into a complete vector formed by neurons in the interconnection module. For example, assuming there are N slave operation modules in the device, the input data *xᵢ* is sent to N slave operation modules. Each slave operation module performs convolution operation on the input data *xᵢ* with the corresponding convolution kernel in the slave operation module to obtain a scalar data; the scalar data of each slave operation module is combined by the interconnection module 4 into an intermediate vector containing N elements. Assuming that the convolution window traverses a total of A*B (A in X direction and B in Y direction, and X and Y are coordinate axes in a three-dimensional orthogonal coordinate system) input data *xᵢ*, above convolution operation is performed on the A*B *xᵢ,* then all the vectors obtained are combined in the master operation module to obtain a three-dimensional intermediate result of A*B*N.

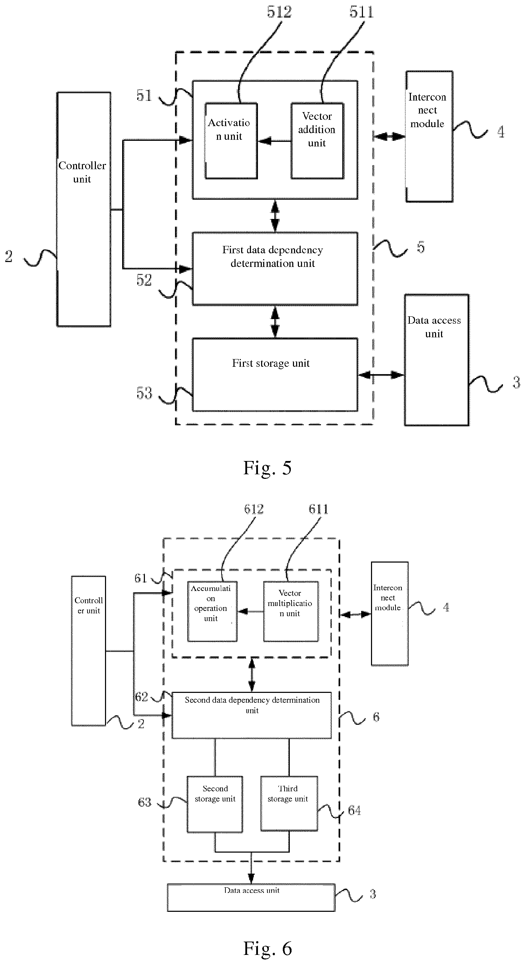

Fig. 5 is an example block view of the structure of the master operation module 5 in the device for performing the forward operation of convolutional neural network, according to the embodiments of the present invention. As shown in Fig. 5, the master operation module 5 includes a first operation unit 51, a first data dependence determination unit 52, and the first storage unit 53.

Among those, the first operation unit 51 includes a vector addition unit 511 and an activation unit 512. The first operation unit 51 receives the control signal from the controller unit to complete various operation functions of the master operation module 5, and the vector addition unit 511 is used to implement the addition bias operation in the forward operation of the convolutional neural network. The component adds the bias data correspondingly to the intermediate result bit to obtain a bias result, and the activation operation unit 512 performs an activation function operation on the bias result. The bias data may be read from the external address space or be stored locally.

The first data dependence determination unit 52 is a port where the first operation unit 51 reads and writes the first storage unit 53 and ensures the read and write consistency of the data in the first storage unit 53. At the same time, the first data dependence determination unit 52 is also responsible for sending the data read from the first storage unit 53 to the slave operation module through the interconnect module 4, and the output data of the slave operation module 6 is sent directly to the first operation unit 51 through the interconnection module 4. The instruction output from the controller unit 2 is sent to the operation unit 51 and the first data dependence determination unit 52 to control their behavior.

The storage unit 53 is used to cache the input data and the output data used by the master operation module 5 in the calculation process.

Fig. 6 is an example block view of the structure of the slave operation module 6 in the device for performing the forward operation of convolutional neural network, according to the embodiments of the present invention. As shown in Fig. 4, each slave operation module 6 includes a second operation unit 61, a data dependence determination unit 62, a second storage unit 63 and a third storage unit 64.

The second operation unit 61 receives a control signal sent by the controller unit 2 and performs a convolution operation. The second operation unit includes a vector multiplying unit 611 and an accumulating unit 612, which are respectively responsible for vector multiplication and accumulating operations in the convolution operation.

The second data dependence determination unit 62 is responsible for the reading and writing operation to the second storage unit 63. The third storage unit 62, before performing in the read and writing operation, firstly guarantees that there is no consistency conflict in reading and writing among instructions. For example, all control signals addressed to the data dependence unit 62 are stored in an instruction queue internal to the data dependence unit 62 in which if the range of reading data for the read instruction conflicts with the range of writing data for the write instruction located in front of the queue, then the instruction should not be performed until the dependent write instruction is performed.

The second storage unit 63 caches the input data and output scalar data of the slave operation module 6.

The third storage unit 64 caches the convolution kernel data required by the slave operation module 6 in the operation process.

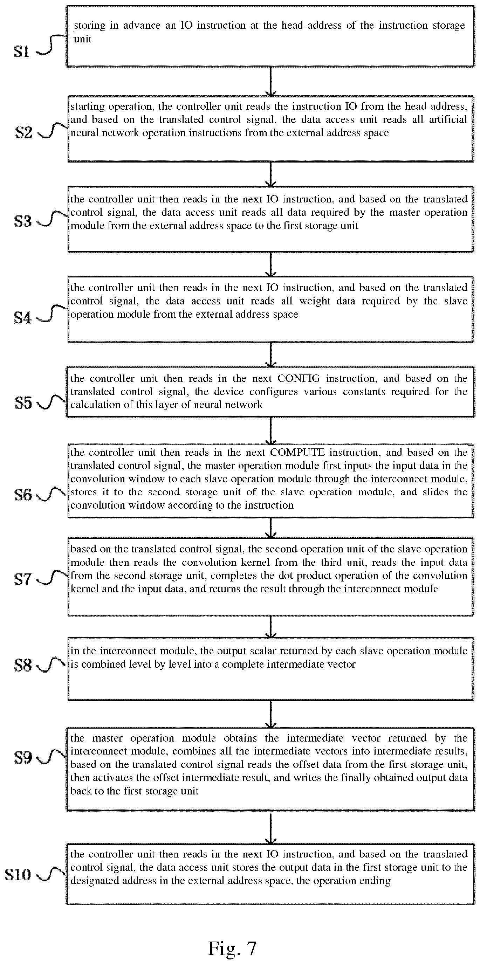

Fig. 7 is a flow chart of the operation device of convolutional neural network performing the convolutional neural network, provided by the embodiments of the present invention. As shown in Fig. 7, the process of performing the convolutional neural network instruction includes:
At step S1, storing an IO instruction in advance at the head address of the instruction storage unit 1.
At step S2, initiating the operation, the controller unit 2 reads the IO instruction from the head address of the instruction storage unit 1, and based on the translated control signal, the data access unit 3 reads all the corresponding operation instructions of convolutional neural network and cache them in the instruction storage unit 1.
At step S3, then the controller unit 2 reads the next IO instruction from the instruction storage unit, and based on the translated control signal, the data access unit 3 reads all data (e.g. including input data, interpolation tables for fast activation of function operations, constant tables for configuration of operation device parameters, bias data) required by the master operation module 5 from the external address space to the first storage unit 53 of the master operation module 5.
At step S4, then again the controller unit 2 reads the next IO instruction from the instruction storage unit, and based on the translated control signal, the data access unit 3 reads the convolution kernel data required by the slave operation module 6 from the external address space.
At step S5, the controller unit 2 then reads the next CONFIG instruction from the instruction storage unit, and based on the translated control signal, the device configures various constants required for the operation of this layer of neural network. For example, the first operation unit 51 and the second operation unit 61 configure the value of the register in the unit according to the parameter configuration in the control signal, for example, the parameter including the data required by the activation function.
At step S6, the controller unit 2 then reads the next COMPUTE instruction from the instruction storage unit, and based on the translated control signal, the master operation 5 firstly sends the input data in the convolution window to each slave operation module 6 through the interconnection module 4, save them to the second storage unit 63 of the slave operation module 6, and then moves the convolution window according to the instruction.
At step S7, based on the control signal translated by the COMPUTE instruction, the operation unit 61 of the slave operation module 6 reads the convolution kernel from the third storage unit 64, reads the input data from the second storage unit 63, and after the convolution operation of the input data and the convolution kernel is completed, the intermediate result is returned through the interconnection module 4.
At step S8, in the interconnection module 4, each intermediate result returned by the slave operation module 6 is sliced into a complete intermediate vector level by level.
At step S9, the master operation module 5 obtains the intermediate vector returned from the interconnection 4 and the convolution window traverses all input data; the master operation module splices all returned vectors into intermediate results, and based on the control signal translated by the COMPUTE instruction, reads the biased data from the first storage unit 53, obtains biased results via addition to the intermediate results through the vector addition unit 511; then the activation unit 512 activates the biased results and writes the last output data back into the first storage unit 53.
At step S10, then the controller unit 2 reads the next IO instruction from the instruction storage unit, and based on the translated control signal, the data access unit 3 saves the output data in the first storage unit 53 to a designated address in the external address space; finally, the operation ends.

For the convolution layer operation of multi-layer artificial neural network, the implementation process is similar to the operation of single layer neural network convolution layer. When the operation of previous convolution layer is performed, the operation instruction of next layer stores the output data address of previous layer stored in the master operation unit as the input data address of the present layer. Similarly, the address of convolution kernel and biased data in the instruction are modified into corresponding addresses in the present layer.

Through employing a device and an instruction set for performing a forward operation of a convolutional neural network, the problems of insufficient CPU and GPU operation performance and large front-end decoding overhead are solved. Supporting of forward operation for the multi-layer convolutional neural network is effectively improve.

Through employing a dedicated on-chip buffer for the forward operation of multi-layer convolutional neural network, the reusability of input neuron and convolution kernel data is fully tapped to avoid repeatedly reading these data into memory, reducing memory access bandwidth and avoiding the problem that the memory bandwidth becomes a bottleneck in the performance of forward operation for the multi-layer convolutional neural networks.

Processes or methods depicted in the preceding figures may be implemented by the processing logic including hardware (e.g., circuitry, dedicated logic, etc.), firmware, software (e.g., software embodied on a non-transitory computer readable medium) or the combination thereof to perform. Although the processes or methods are described above in terms of certain sequential operations, it should be understood that some of the described operations can be performed in a different order. In addition, some operations may be performed in parallel rather than sequentially.

## Claims

1. A device performing a forward operation of a convolutional neural network, comprising an instruction storage unit (1), a controller unit (2), a data access unit (3), an interconnection module (4), a master operation module (5) and a plurality of slave operation modules (6), wherein:
the instruction storage unit (1) reads instructions through the data access unit and stores the read instructions;
the controller unit (2) reads the instructions from the instruction storage unit (1) to translate it into a control signal,
wherein the control signal is configured to control the behavior of other modules including the data access unit (3), the master operation module (5) and the plurality of slave operation modules (6);
the data access unit (3) accesses an address space external to the device, reads and writes data for loading and storing the data as input data;
each slave operation module (6) is used to implement the convolution operation of the input data and a respective convolution kernel in a convolutional neural network algorithm;
the interconnection module (4) is used for the data transmission between the master (5) and the plurality of slave operation modules (6);
wherein the interconnection module (4) is an H tree module, which constitutes a data path between the master operation module (5) and the plurality of slave operation modules (6); wherein the data path is a binary tree path formed by a plurality of nodes, wherein each node is configured to send an upstream data to its two downstream nodes, and to merge data returned by its two downstream nodes and return them to its upstream node;
wherein prior to the forward propagation of a connected layer of the neural network:
the master operation module (5) transfers the input data from the data access unit (3) to each slave operation module (6) through the interconnection module (4); and after the calculation of each slave operation module (6) is completed, the interconnection module (4) combines level by level the output scalar data of each slave operation module (6) into an intermediate vector and transfers it back to the master operation module (5); and
the master operation module (5) slices the intermediate vectors of all the input data into an intermediate result and performs a subsequent operation on the intermediate results.

2. The device according to claim 1, wherein the master operation module (5) adds the intermediate result to a biased data and then perform an activation operation.

3. The device according to claim 1, wherein the plurality of slave operation modules (6) utilizes the same input data and their respective convolution kernels to calculate their respective output scalars in parallel.

4. The device according to claim 2, wherein the activation function "active" used by the master operation module (5) is any of the nonlinear functions "sigmoid", "tanh", "relu", "softmax" or a linear function.

5. The device according to claim 1, wherein the master operation module (5) includes a first operation unit (51), a first data dependence determination unit (52), and a first storage unit (53), wherein:
the first storage unit (53) is used to cache the input data and the output data used by the master operation module (5);
the first operation unit (51) completes various operation functions of the master operation module (5);
the first data dependence determination unit is a port where the first operation unit (51) reads and writes the first storage unit (53), guarantees that there is no inconsistency conflict in reading and writing data of the first storage unit (53), and is responsible for reading the input from the first storage unit (53), and sending the input to each slave operation module (6) through the interconnection module (4); and
the intermediate result vector from the interconnection module (4) is sent to the first operation unit (51).

6. The device according to claim 1, wherein each slave operation module (6) includes a second operation unit (61), a second data dependence determination unit (62), a second storage unit (63) and a third storage unit (64), wherein:
the second operation unit (61) receives a control signal sent by the controller unit (2) and performs arithmetic and logic operation;
the second data dependence determination unit (62) is responsible for the reading and writing operation to the second storage unit (63) and the third storage unit (64), guarantees that there is no consistency conflict in reading and writing the second storage unit (63) and the third storage unit (64);
the second storage unit (63) caches the input data and the output scalar calculated from each slave operation module (6); and
the third storage unit caches (64) the convolution kernel required by each slave operation module (6).

7. The device according to claim 5 or 6, wherein the first and second data dependence determination unit (52, 62) guarantees that there is no consistency conflict in reading and writing by the following means: determining whether there is a dependency between the control signal that has not been transmitted and the data of the control signal that is being performed, if not, allowing the control signal to be transmitted immediately, otherwise the control signal being not allowed to transmit until the data of all the control signals on which the control signal depends are completely performed.

8. The device according to claim 1, wherein the data access unit (3) reads at least one of input data, biased data or convolution kernel from the external address space.

9. A method of performing a forward operation of a convolutional neural network, the method comprising:
providing an instruction storage unit (1), a controller unit (2), a data access unit (3), an interconnection module (4), a master operation module (5) and a plurality of slave operation modules (6):
the instruction storage unit (1) reading instructions through the data access unit (3) and storing the read instructions;
the controller unit (2) reading the instructions from the instruction storage unit (1) to translate it into a control signal;
the control signal controlling the behavior of other modules including the data access unit (3), the master operation module (5) and the plurality of slave operation modules (6);
the data access unit (3) accessing an address space external to the device, reading and writing data for loading and storing the data as input data;
each slave operation module (6) implementing the convolution operation of the input data and a respective convolution kernel in a convolutional neural network algorithm;
the interconnection module (4) transferring data between the master and the plurality of slave operation modules (5, 6);
wherein the interconnection module (4) is an H tree module, which constitutes a data path between the master operation module (5) and the plurality of slave operation modules (6); wherein the data path is a binary tree path formed by a plurality of nodes, each node sending an upstream data to its two downstream nodes, and merging data returned by its two downstream nodes and returning them to its upstream node;
prior to the forward propagation of a connected layer of the neural network:
the master operation module (5) transferring the input data from the data access unit (3) to each slave operation module (6) through the interconnection module (4);
after the calculation of each slave operation module (6) is completed, the interconnection module (4) combining level by level the output scalar data of each slave operation module (6) into an intermediate vector and transferring it back to the master operation module (5); and
the master operation module (5) slicing the intermediate vectors of all the input data into an intermediate result and performing a subsequent operation on the intermediate results.

10. The method according to claim 9, further comprising:
the master operation module (5) adding the intermediate result to a biased data and then performing an activation operation.

11. The method according to claim 9, further comprising:
the plurality of slave operation modules (6) utilizing the same input data and their respective convolution kernels to calculate their respective output scalars in parallel.

12. The method according to claim 9,
wherein the interconnection module (4) constitutes a data path of the continuous or discrete data between the master operation module (5) and the plurality of slave operation modules (6), and
the interconnection module (4) is any one of the following structures: a tree structure, a ring structure, a grid structure, a hierarchical interconnection and a bus structure.

13. A method of performing a forward operation of a single layer convolutional neural network according to any of claims 9-12, comprising:
at step S1, storing an IO instruction in advance at the head address of the instruction storage unit (1);
at step S2, initiating the operation, the controller unit (2) reading the IO instruction from the head address of the instruction storage unit (1), and based on the translated control signal, the data access unit (3) reading all the corresponding operation instructions of the convolutional neural network and cache them in the instruction storage unit (1);
at step S3, then the controller unit (2) reading the next IO instruction from the instruction storage unit (1), and based on the translated control signal, the data access unit (3) reading all data required by the master operation module (5) from the external address space to the first storage unit (53) of the master operation module (5);
at step S4, then again the controller unit (2) reading the next IO instruction from the instruction storage unit (1), and based on the translated control signal, the data access unit (3) reading the convolution kernel data required from the operation module (5) from the external address space;
at step S5, the controller unit (2) then reading a next CONFIG instruction from the instruction storage unit (1), and based on the translated control signal, the device configuring various constants required for the operation of this layer of neural network;
at step S6, the controller unit (2) then reading a next COMPUTE instruction from the instruction storage unit (1), and based on the translated control signal, the master operation module (5) firstly sending the input data in the convolution window to each slave operation module (6) through the interconnection module (4), saving them to the second storage unit of each slave operation module (6), and then moving the convolution window according to the instruction;
at step S7, based on the control signal translated by the COMPUTE instruction, the operation unit of each slave operation module (6) reading the convolution kernel from the third storage unit (64), reading the input data from the second storage unit (63), and after the convolution operation of the input data and the convolution kernel is completed, returning the output scalar obtained through the interconnection module (4);
at step S8, in the interconnection module (4), slicing each output scalar data returned from each slave operation module (6) into a complete intermediate vector level by level;
at step S9, the master operation module (5) obtaining the intermediate vector returned from the interconnection module (4) and the convolution window traversing all input data; the master operation module (5) slicing all returned vectors into intermediate results, and based on the control signal translated by the COMPUTE instruction, reading the biased data from the first storage unit (53), obtaining biased results with the intermediate results through a vector addition unit (511); then an activation unit (512) activating the biased results and writing the last output data back into the first storage unit (53);
at step S10, then the controller unit (2) reading the next IO instruction from the instruction storage unit (1), and based on the translated control signal, the data access unit (3) saving the output data in the first storage unit (53) to a designated address in the external address space; finally, the operation ends.

14. A method of performing a forward operation of a multi-layer convolutional neural network, comprising:
performing the method according to any of claims 9-13 to each layer of the multi-layer convolutional neural network;
after performing a previous layer of convolutional neural network, the operation instruction of a present layer using the output data address of the previous layer stored in the master operation unit (5) as the input data address of the present layer, and modifying the address of convolution kernel and biased data in the instruction into corresponding addresses.

## Patentansprüche

1. Vorrichtung, die eine Vorwärtsoperation eines neuronalen Faltungsnetzes durchführt und eine Instruktionsspeichereinheit (1), eine Controller-Einheit (2), eine Datenzugriffseinheit (3), ein Vernetzungsmodul (4), ein Master-Operationsmodul (5) und mehrere Slave-Operationsmodule (6) umfasst, wobei:
die Instruktionsspeichereinheit (1) Instruktionen über die Datenzugriffseinheit liest und die gelesenen Instruktionen speichert;
die Controller-Einheit (2) die Instruktionen aus der Instruktionsspeichereinheit (1) liest, um sie in ein Steuersignal zu übersetzen,
wobei das Steuersignal dafür konfiguriert ist, das Verhalten anderer Module, einschließlich der Datenzugriffseinheit (3), des Master-Operationsmoduls (5) und der mehreren Slave-Operationsmodule (6), zu steuern;
die Datenzugriffseinheit (3) auf einen Adressraum zugreift, der sich außerhalb der Vorrichtung befindet, sowie Daten zum Laden und Speichern der Daten als Eingabedaten liest und schreibt;
jedes Slave-Operationsmodul (6) dafür verwendet wird, die Faltungsoperation der Eingabedaten und einen jeweiligen Faltungskern in einem Algorithmus für ein neuronales Faltungsnetz zu implementieren;
das Vernetzungsmodul (4) für die Datenübertragung zwischen dem Master- (5) und den mehreren Slave-Operationsmodulen (6) verwendet wird;
wobei das Vernetzungsmodul (4) ein H-Baummodul ist, das einen Datenpfad zwischen dem Master-Operationsmodul (5) und den mehreren Slave-Operationsmodulen (6) bildet;
wobei der Datenpfad ein binärer Baumpfad ist, der durch mehrere Knoten gebildet wird, wobei jeder Knoten dafür konfiguriert ist, stromaufwärtige Daten an seine beiden stromabwärtigen Knoten zu senden und Daten, die durch seine beiden stromabwärtigen Knoten zurückgesendet werden, zu fusionieren und sie an seinen stromaufwärtigen Knoten zurückzusenden;
wobei vor der Vorwärtspropagation einer verbundenen Schicht des neuronalen Netzes:
das Master-Operationsmodul (5) die Eingabedaten von der Datenzugriffseinheit (3) über das Vernetzungsmodul (4) an jedes Slave-Operationsmodul (6) überträgt; und
nachdem die Berechnung jedes Slave-Operationsmoduls (6) vollendet ist, das Vernetzungsmodul (4) die Ausgabeskalardaten jedes Slave-Operationsmoduls (6) Ebene für Ebene zu einem Zwischenvektor kombiniert und sie zurück zu dem Master-Operationsmodul (5) überträgt; und
das Master-Operationsmodul (5) die Zwischenvektoren aller Eingabedaten zu einem Zwischenergebnis zerlegt und eine anschließende Operation an den Zwischenergebnissen durchführt.

2. Vorrichtung nach Anspruch 1, wobei das Master-Operationsmodul (5) das Zwischenergebnis zu den verzerrten Daten addiert und dann eine Aktivierungsoperation durchführt.

3. Vorrichtung nach Anspruch 1, wobei die mehreren Slave-Operationsmodule (6) dieselben Eingabedaten und ihre jeweiligen Faltungskerne verwenden, um ihre jeweiligen Ausgabeskalare parallel zu berechnen.

4. Vorrichtung nach Anspruch 2, wobei die durch das Master-Operationsmodul (5) verwendete Aktivierungsfunktion "active" eine der nichtlinearen Funktionen "sigmoid", "tanh", "relu", "softmax" oder eine lineare Funktion ist.

5. Vorrichtung nach Anspruch 1, wobei das Master-Operationsmodul (5) eine erste Operationseinheit (51), eine erste Datenabhängigkeitsbestimmungseinheit (52) und eine erste Speichereinheit (53) enthält, wobei:
die erste Speichereinheit (53) zum Cache-Speichern der Eingabedaten und der Ausgabedaten, die durch das Master-Operationsmodul (5) verwendet werden, verwendet wird;
die erste Operationseinheit (51) verschiedene Operationsfunktionen des Master-Operationsmoduls (5) vollendet;
die erste Datenabhängigkeitsbestimmungseinheit ein Port ist, wo die erste Operationseinheit (51) die erste Speichereinheit (53) liest und schreibt, garantiert, dass kein Inkonsistenzkonflikt beim Lesen und Schreiben von Daten der ersten Speichereinheit (53) besteht, und dafür verantwortlich ist, die Eingabe von der ersten Speichereinheit (53) zu lesen und die Eingabe über das Vernetzungsmodul (4) an jedes Slave-Operationsmodul (6) zu senden; und
der Zwischenergebnisvektor von dem Vernetzungsmodul (4) an die erste Operationseinheit (51) gesendet wird.

6. Vorrichtung nach Anspruch 1, wobei jedes Slave-Operationsmodul (6) eine zweite Operationseinheit (61), eine zweite Datenabhängigkeitsbestimmungseinheit (62), eine zweite Speichereinheit (63) und eine dritte Speichereinheit (64) enthält, wobei:
die zweite Operationseinheit (61) ein durch die Controller-Einheit (2) gesendetes Steuersignal empfängt und eine arithmetische und logische Operation durchführt;
die zweite Datenabhängigkeitsbestimmungseinheit (62) für die Lese- und Schreiboperation in die zweite Speichereinheit (63) und die dritte Speichereinheit (64) verantwortlich ist und garantiert, dass kein Konsistenzkonflikt beim Lesen und Schreiben in die zweite Speichereinheit (63) und die dritte Speichereinheit (64) besteht;
die zweite Speichereinheit (63) die Eingabedaten und den von jedem Slave-Operationsmodul (6) berechneten Ausgabeskalar Cachespeichert; und
die dritte Speichereinheit (64) den durch jedes Slave-Operationsmodul (6) benötigten Faltungskern speichert.

7. Vorrichtung nach Anspruch 5 oder 6, wobei die erste und die zweite Datenabhängigkeitsbestimmungseinheit (52, 62) durch die folgenden Mittel garantiert, dass kein Konsistenzkonflikt beim Lesen und Schreiben besteht:
Bestimmen, ob eine Abhängigkeit zwischen dem Steuersignal, das noch nicht gesendet wurde, und den Daten des Steuersignals, die durchgeführt werden, besteht, und wenn nicht, Erlauben, dass das Steuersignal sofort gesendet wird, anderenfalls Untersagen, dass das Steuersignal gesendet wird, bis die Daten aller Steuersignale, von denen das Steuersignal abhängig ist, vollständig durchgeführt wurden.

8. Vorrichtung nach Anspruch 1, wobei die Datenzugriffseinheit (3) mindestens eines von Eingabedaten, verzerrten Daten und Faltungskernen aus dem externen Adressraum liest.

9. Verfahren zum Durchführen einer Vorwärtsoperation eines neuronalen Faltungsnetzes, wobei das Verfahren umfasst:
Bereitstellen einer Instruktionsspeichereinheit (1), einer Controller-Einheit (2), einer Datenzugriffseinheit (3), eines Vernetzungsmoduls (4), eines Master-Operationsmoduls (5) und mehrerer Slave-Operationsmodule (6);
dass die Instruktionsspeichereinheit (1) Instruktionen über die Datenzugriffseinheit (3) liest und die gelesenen Instruktionen speichert;
dass die Controller-Einheit (2) die Instruktionen aus der Instruktionsspeichereinheit (1) liest, um sie in ein Steuersignal zu übersetzen;
dass das Steuersignal das Verhalten anderer Module, einschließlich der Datenzugriffseinheit (3), des Master-Operationsmoduls (5) und der mehreren Slave-Operationsmodule (6), steuert;
dass die Datenzugriffseinheit (3) auf einen Adressraum zugreift, der sich außerhalb der Vorrichtung befindet, und Daten zum Laden und Speichern der Daten als Eingabedaten liest und schreibt;
dass jedes Slave-Operationsmodul (6) die Faltungsoperation der Eingabedaten und einen jeweiligen Faltungskern in einem Algorithmus für ein neuronales Faltungsnetz implementiert;
dass das Vernetzungsmodul (4) Daten zwischen dem Master- und den mehreren Slave-Operationsmodulen (5, 6) überträgt;
wobei das Vernetzungsmodul (4) ein H-Baummodul ist, das einen Datenpfad zwischen dem Master-Operationsmodul (5) und den mehreren Slave-Operationsmodulen (6) bildet;
wobei der Datenpfad ein binärer Baumpfad ist, der durch mehrere Knoten gebildet wird, wobei jeder Knoten stromaufwärtige Daten an seine beiden stromabwärtigen Knoten sendet und Daten, die durch seine beiden stromabwärtigen Knoten zurückgesendet werden, fusioniert und sie an seinen stromaufwärtigen Knoten zurücksendet;
wobei vor der Vorwärtspropagation einer verbundenen Schicht des neuronalen Netzes:
das Master-Operationsmodul (5) die Eingabedaten von der Datenzugriffseinheit (3) über das Vernetzungsmodul (4) an jedes Slave-Operationsmodul (6) überträgt; und
nachdem die Berechnung jedes Slave-Operationsmoduls (6) vollendet ist, das Vernetzungsmodul (4) die Ausgabeskalardaten jedes Slave-Operationsmoduls (6) Ebene für Ebene zu einem Zwischenvektor kombiniert und sie zurück zu dem Master-Operationsmodul (5) überträgt; und
das Master-Operationsmodul (5) die Zwischenvektoren aller Eingabedaten zu einem Zwischenergebnis zerlegt und eine anschließende Operation an den Zwischenergebnissen durchführt.

10. Verfahren nach Anspruch 9, das des Weiteren umfasst:
dass das Master-Operationsmodul (5) das Zwischenergebnis zu den verzerrten Daten addiert und dann eine Aktivierungsoperation durchführt.

11. Verfahren nach Anspruch 9, das des Weiteren umfasst:
dass die mehreren Slave-Operationsmodule (6) dieselben Eingabedaten und ihre jeweiligen Faltungskerne verwenden, um ihre jeweiligen Ausgabeskalare parallel zu berechnen.

12. Verfahren nach Anspruch 9, wobei das Vernetzungsmodul (4) einen Datenpfad der kontinuierlichen oder diskreten Daten zwischen dem Master-Operationsmodul (5) und den mehreren Slave-Operationsmodulen (6) bildet, und
das Vernetzungsmodul (4) eine beliebige der folgenden Strukturen ist: eine Baumstruktur, eine Ringstruktur, eine Gitterstruktur, eine hierarchische Vernetzung, und eine Busstruktur.

13. Verfahren zum Durchführen einer Vorwärtsoperation eines einschichtigen neuronalen Faltungsnetzes nach einem der Ansprüche 9-12, wobei das Verfahren umfasst:
in Schritt S1 wird eine E/A-Instruktion im Voraus in der Kopfadresse der Instruktionsspeichereinheit (1) gespeichert;
in Schritt S2 wird die Operation initiiert, die Controller-Einheit (2) liest die E/A-Instruktion aus der Kopfadresse der Instruktionsspeichereinheit (1), und die Datenzugriffseinheit (3) liest auf der Grundlage des übersetzten Steuersignals alle entsprechenden Operationsinstruktionen des neuronalen Faltungsnetzes und Cachespeichert sie in der Instruktionsspeichereinheit (1);
in Schritt S3 liest die Controller-Einheit (2) dann die nächste E/A-Instruktion aus der Instruktionsspeichereinheit (1), und die Datenzugriffseinheit (3) liest auf der Grundlage des übersetzten Steuersignals alle durch das Master-Operationsmodul (5) benötigten Daten aus dem externen Adressraum in die erste Speichereinheit (53) des Master-Operationsmoduls (5);
in Schritt S4 liest die Controller-Einheit (2) dann wieder die nächste E/A-Instruktion aus der Instruktionsspeichereinheit (1), und die Datenzugriffseinheit (3) liest auf der Grundlage des übersetzten Steuersignals die von dem Operationsmodul (5) benötigten Faltungskerndaten aus dem externen Adressraum;
in Schritt S5 liest die Controller-Einheit (2) dann eine nächste CONFIG-Instruktion aus der Instruktionsspeichereinheit (1), und die Vorrichtung konfiguriert auf der Grundlage des übersetzten Steuersignals verschiedene Konstanten, die für die Operation dieser Schicht des neuronalen Netzes erforderlich sind;
in Schritt S6 liest die Controller-Einheit (2) dann eine nächste COMPUTE-Instruktion aus der Instruktionsspeichereinheit (1), und das Master-Operationsmodul (5) sendet auf der Grundlage des übersetzten Steuersignals zuerst die Eingabedaten in dem Faltungsfenster über das Vernetzungsmodul (4) an jedes Slave-Operationsmodul (6), speichert sie in der zweiten Speichereinheit jedes Slave-Operationsmoduls (6), und bewegt dann das Faltungsfenster gemäß der Instruktion;
in Schritt S7 liest die Operationseinheit jedes Slave-Operationsmoduls (6) auf der Grundlage des durch die COMPUTE-Instruktion übersetzten Steuersignals den Faltungskern aus der dritten Speichereinheit (64), liest die Eingabedaten aus der zweiten Speichereinheit (63), und sendet, nachdem die Faltungsoperation der Eingabedaten und des Faltungskerns vollendet ist, den über das Vernetzungsmodul (4) erhaltenen Ausgabeskalar zurück;
in Schritt S8 werden in dem Vernetzungsmodul (4) die Ausgabeskalardaten, die von jedem Slave-Operationsmodul (6) zurückgesendet werden, Ebene für Ebene in einen vollständigen Zwischenvektor zerlegt;
in Schritt S9 erhält das Master-Operationsmodul (5) den von dem Vernetzungsmodul (4) zurückgesendeten Zwischenvektor und das Faltungsfenster, das alle Eingabedaten durchläuft; das Master-Operationsmodul (5) zerlegt alle zurückgesendeten Vektoren in Zwischenergebnisse und liest auf der Grundlage des durch die COMPUTE-Instruktion übersetzten Steuersignals die verzerrten Daten aus der ersten Speichereinheit (53), wodurch verzerrte Ergebnisse mit den Zwischenergebnissen über eine Vektoradditionseinheit (511) erhalten werden; und dann aktiviert eine Aktivierungseinheit (512) die verzerrten Ergebnisse und schreibt die letzten Ausgabedaten in die erste Speichereinheit (53) zurück;
in Schritt S10 liest die Controller-Einheit (2) dann die nächste E/A-Instruktion aus der Instruktionsspeichereinheit (1), und auf der Grundlage des übersetzten Steuersignals speichert die Datenzugriffseinheit (3) die Ausgabedaten in der ersten Speichereinheit (53) an einer bezeichneten Adresse im externen Adressraum; schließlich endet die Operation.

14. Verfahren zum Durchführen einer Vorwärtsoperation eines mehrschichtigen neuronalen Faltungsnetzes, wobei das Verfahren umfasst:
Durchführen des Verfahrens nach einem der Ansprüche 9-13 für jede Schicht des mehrschichtigen neuronalen Faltungsnetzes;
nach dem Durchführen einer vorherigen Schicht des neuronalen Faltungsnetzes verwendet die Operationsinstruktion einer momentanen Schicht die Ausgabedatenadresse der vorherigen Schicht, die in der Master-Operationseinheit (5) gespeichert ist, als die Eingabedatenadresse der momentanen Schicht und modifiziert die Adresse des Faltungskerns und der verzerrten Daten in der Instruktion zu entsprechenden Adressen.

## Revendications

1. Dispositif réalisant une opération vers l'avant d'un réseau neuronal convolutif, comprenant une unité de stockage d'instructions (1), une unité de commande (2), une unité d'accès de données (3), un module d'interconnexion (4), un module d'opération maître (5) et une pluralité de modules d'opération esclaves (6), dans lequel :
l'unité de stockage d'instructions (1) lit des instructions par l'intermédiaire de l'unité d'accès de données et stocke les instructions lues ;
l'unité de commande (2) lit les instructions depuis l'unité de stockage d'instructions (1) pour les traduire en un signal de commande,
dans lequel le signal de commande est configuré pour commander le comportement d'autres modules incluant l'unité d'accès de données (3), le module d'opération maître (5) et la pluralité de modules d'opération esclaves (6) ;
l'unité d'accès de données (3) accède à un espace d'adresse à l'extérieur du dispositif, lit et écrit des données pour charger et stocker les données en tant que données d'entrée ;
chaque module d'opération esclave (6) est utilisé pour mettre en oeuvre l'opération de convolution des données d'entrée et un noyau de convolution respectif dans un algorithme de réseau neuronal convolutif ;
le module d'interconnexion (4) est utilisé pour la transmission de données entre le module d'opération maître (5) et la pluralité de modules d'opération esclaves (6) ;
dans lequel le module d'interconnexion (4) est un module d'arbre en H, qui constitue un trajet de données entre le module d'opération maître (5) et la pluralité de modules d'opération esclaves (6) ;
dans lequel le trajet de données est un trajet d'arbre binaire formé par une pluralité de noeuds, dans lequel chaque noeud est configuré pour envoyer des données en amont à ses deux noeuds en aval, et pour fusionner des données retournées par ses deux noeuds en aval et les retourner à son noeud en amont ;
dans lequel avant la propagation vers l'avant d'une couche connectée du réseau neuronal :
le module d'opération maître (5) transfère les données d'entrée de l'unité d'accès de données (3) à chaque module d'opération esclave (6) par l'intermédiaire du module d'interconnexion (4) ; et,
après que le calcul de chaque module d'opération esclave (6) est terminé, le module d'interconnexion (4) combine niveau par niveau les données scalaires de sortie de chaque module d'opération esclave (6) dans un vecteur intermédiaire et le transfère en retour au module d'opération maître (5) ; et
le module d'opération maître (5) découpe en tranches les vecteurs intermédiaires de toutes les données d'entrée dans un résultat intermédiaire et réalise une opération suivante sur les résultats intermédiaires.

2. Dispositif selon la revendication 1, dans lequel le module d'opération maître (5) ajoute le résultat intermédiaire à des données biaisées puis réalise une opération d'activation.

3. Dispositif selon la revendication 1, dans lequel la pluralité de modules d'opération esclaves (6) utilise les mêmes données d'entrée et leurs noyaux de convolution respectifs pour calculer leurs scalaires de sortie respectifs en parallèle.

4. Dispositif selon la revendication 2, dans lequel la fonction d'activation « active » utilisée par le module d'opération maître (5) est l'une quelconque parmi les fonctions non linéaires « sigmoid », « tanh », « relu », « softmax » ou une fonction linéaire.

5. Dispositif selon la revendication 1, dans lequel le module d'opération maître (5) inclut une première unité d'opération (51), une première unité de détermination de dépendance de données (52), et une première unité de stockage (53), dans lequel :
la première unité de stockage (53) est utilisée pour mettre en mémoire cache les données d'entrée et les données de sortie utilisées par le module d'opération maître (5) ;
la première unité d'opération (51) effectue diverses fonctions d'opération du module d'opération maître (5) ;
la première unité de détermination de dépendance de données est un port auquel la première unité d'opération (51) lit et écrit la première unité de stockage (53), garantit qu'il n'y a pas de conflit d'incohérence de lecture et d'écriture de données de la première unité de stockage (53), et est responsable de lire l'entrée de la première unité de stockage (53) et d'envoyer l'entrée à chaque module d'opération esclave (6) par l'intermédiaire du module d'interconnexion (4) ; et
le vecteur de résultat intermédiaire du module d'interconnexion (4) est envoyé à la première unité d'opération (51).

6. Dispositif selon la revendication 1, dans lequel chaque module d'opération esclave (6) inclut une deuxième unité d'opération (61), une deuxième unité de détermination de dépendance de données (62), une deuxième unité de stockage (63) et une troisième unité de stockage (64), dans lequel :
la deuxième unité d'opération (61) reçoit un signal de commande envoyé par l'unité de commande (2) et réalise une opération arithmétique et logique ;
la deuxième unité de détermination de dépendance de données (62) est responsable de la lecture et de l'écriture d'opération dans la deuxième unité de stockage (63) et la troisième unité de stockage (64), garantit qu'il n'y a pas de conflit de cohérence de lecture et d'écriture de la deuxième unité de stockage (63) et de la troisième unité de stockage (64) ;
la deuxième unité de stockage (63) met en mémoire cache les données d'entrée et le scalaire de sortie calculé de chaque module d'opération esclave (6) ; et
la troisième unité de stockage (64) met en mémoire cache le noyau de convolution requis par chaque module d'opération esclave (6).

7. Dispositif selon la revendication 5 ou 6, dans lequel les première et deuxième unités de détermination de dépendance de données (52, 62) garantissent qu'il n'y a pas de conflit de cohérence de lecture et d'écriture par les moyens suivants :
la détermination s'il existe ou non une dépendance entre le signal de commande qui n'a pas été transmis et les données du signal de commande en cours de réalisation ; si tel n'est pas le cas, l'autorisation au signal de commande d'être immédiatement transmis, sinon l'interdiction au signal de commande d'être transmis jusqu'à ce que les données de tous les signaux de commande desquels dépend le signal de commande soient complètement réalisées.

8. Dispositif selon la revendication 1, dans lequel l'unité d'accès de données (3) lit au moins un élément parmi des données d'entrée, des données biaisées et un noyau de convolution de l'espace d'adresse externe.

9. Procédé de réalisation d'une opération vers l'avant d'un réseau neuronal convolutif, le procédé comprenant :
la fourniture d'une unité de stockage d'instructions (1), d'une unité de commande (2), d'une unité d'accès de données (3), d'un module d'interconnexion (4), d'un module d'opération maître (5) et d'une pluralité de modules d'opération esclaves (6) ;
par l'unité de stockage d'instructions (1), la lecture d'instructions par l'intermédiaire de l'unité d'accès de données (3) et le stockage des instructions lues ;
par l'unité de commande (2), la lecture des instructions depuis l'unité de stockage d'instructions (1) pour les traduire en un signal de commande ;
par le signal de commande, la commande du comportement d'autres modules incluant l'unité d'accès de données (3), le module d'opération maître (5) et la pluralité de modules d'opération esclaves (6) ;
par l'unité d'accès de données (3), l'accès à un espace d'adresse à l'extérieur du dispositif, la lecture et l'écriture de données pour charger et stocker les données en tant que données d'entrée ;
par chaque module d'opération esclave (6), la mise en oeuvre de l'opération de convolution des données d'entrée et d'un noyau de convolution respectif dans un algorithme de réseau neuronal convolutif ;
par le module d'interconnexion (4), le transfert de données entre le maître et la pluralité de modules d'opération esclaves (5, 6) ;
dans lequel le module d'interconnexion (4) est un module d'arbre en H, qui constitue un trajet de données entre le module d'opération maître (5) et la pluralité de modules d'opération esclaves (6) ;
dans lequel le trajet de données est un trajet d'arbre binaire formé par une pluralité de noeuds, chaque noeud envoyant des données en amont à ses deux noeuds en aval, et fusionnant des données retournées par ses deux noeuds en aval et les retournant à son noeud en amont ;
avant la propagation vers l'avant d'une couche connectée du réseau neuronal :
par le module d'opération maître (5), le transfert des données d'entrée de l'unité d'accès de données (3) à chaque module d'opération esclave (6) par l'intermédiaire du module d'interconnexion (4) ;
après que le calcul de chaque module d'opération esclave (6) est terminé, par le module d'interconnexion (4), la combinaison niveau par niveau des données scalaires de sortie de chaque module d'opération esclave (6) dans un vecteur intermédiaire et le transfert de celui-ci en retour au module d'opération maître (5) ; et
par le module d'opération maître (5), le découpage en tranches des vecteurs intermédiaires de toutes les données d'entrée dans un résultat intermédiaire et la réalisation d'une opération suivante sur les résultats intermédiaires.

10. Procédé selon la revendication 9, comprenant en outre :
par le module d'opération maître (5), l'ajout du résultat intermédiaire à des données biaisées puis la réalisation d'une opération d'activation.

11. Procédé selon la revendication 9, comprenant en outre :
par la pluralité de modules d'opération esclaves (6), l'utilisation des mêmes données d'entrée et de leurs noyaux de convolution respectifs pour calculer leurs scalaires de sortie respectifs en parallèle.

12. Procédé selon la revendication 9, dans lequel le module d'interconnexion (4) constitue un trajet de données des données continues ou discrètes entre le module d'opération maître (5) et la pluralité de modules d'opération esclave (6), et
le module d'interconnexion (4) est l'une quelconque parmi les structures suivantes : une structure d'arbre, une structure d'anneau, une structure de grille, une interconnexion hiérarchique et une structure de bus.

13. Procédé de réalisation d'une opération vers l'avant d'un réseau neuronal convolutif monocouche selon l'une quelconque des revendications 9 à 12, comprenant :
à une étape S1, le stockage d'une instruction d'entrée/sortie, IO, à l'avance à l'adresse de tête de l'unité de stockage d'instructions (1) ;
à une étape S2, l'initiation de l'opération, la lecture, par l'unité de commande (2), de l'instruction IO depuis l'adresse de tête de l'unité de stockage d'instructions (1), et, sur la base du signal de commande traduit, la lecture, par l'unité d'accès de données (3), de toutes les instructions d'opération correspondantes du réseau neuronal convolutif et leur mise en mémoire cache dans l'unité de stockage d'instructions (1) ;
à une étape S3, la lecture ensuite, par l'unité de commande (2), de l'instruction IO suivante de l'unité de stockage d'instructions (1), et, sur la base du signal de commande traduit, la lecture, par l'unité d'accès de données (3), de toutes les données requises par le module d'opération maître (5) depuis l'espace d'adresse externe dans la première unité de stockage (53) du module d'opération maître (5) ;
à une étape S4, la lecture à nouveau, par l'unité de commande (2), de l'instruction IO suivante depuis l'unité de stockage d'instructions (1), et, sur la base du signal de commande traduit, la lecture, par l'unité d'accès de données (3), des données de noyau de convolution requises du module d'opération (5) depuis l'espace d'adresse externe ;
à une étape S5, la lecture ensuite, par l'unité de commande (2), d'une instruction CONFIG suivante de l'unité de stockage d'instructions (1), et, sur la base du signal de commande traduit, la configuration, par le dispositif, de diverses constantes requises pour l'opération de cette couche de réseau neuronal ;
à une étape S6, la lecture ensuite, par l'unité de commande (2), d'une instruction COMPUTE suivante de l'unité de stockage d'instructions (1), et, sur la base du signal de commande traduit, l'envoi tout d'abord, par le module d'opération maître (5), des données d'entrée dans la fenêtre de convolution à chaque module d'opération esclave (6) par l'intermédiaire du module d'interconnexion (4), l'enregistrement de celles-ci dans la deuxième unité de stockage de chaque module d'opération esclave (6), puis le déplacement de la fenêtre de convolution selon l'instruction ;
à une étape S7, sur la base du signal de commande traduit par l'instruction COMPUTE, par l'unité d'opération de chaque module d'opération esclave (6), la lecture du noyau de convolution de la troisième unité de stockage (64), la lecture des données d'entrée de la deuxième unité de stockage (63), et, après que l'opération de convolution des données d'entrée et du noyau de convolution est terminée, le retour du scalaire de sortie obtenu par l'intermédiaire du module d'interconnexion (4) ;
à une étape S8, dans le module d'interconnexion (4), le découpage en tranches de toutes les données scalaires de sortie retournées de chaque module d'opération esclave (6) dans un vecteur intermédiaire complet niveau par niveau ;
à une étape S9, l'obtention, par le module d'opération maître (5), du vecteur intermédiaire retourné depuis le module d'interconnexion (4) et de la fenêtre de convolution traversant toutes les données d'entrée ; par le module d'opération maître (5), le découpage en tranches de tous les vecteurs retournés dans des résultats intermédiaires et, sur la base du signal de commande traduit par l'instruction COMPUTE, la lecture des données biaisées de la première unité de stockage (53), l'obtention de résultats biaisés avec les résultats intermédiaires par l'intermédiaire d'une unité d'ajout de vecteur (511) ; puis, par une unité d'activation (512), l'activation des résultats biaisés et l'écriture des dernières données de sortie en retour dans la première unité de stockage (53) ;
à une étape S10, la lecture ensuite, par l'unité de commande (2), de l'instruction IO suivante de l'unité de stockage d'instructions (1) et, sur la base du signal de commande traduit, l'enregistrement, par l'unité d'accès de données (3), des données de sortie dans la première unité de stockage (53) à une adresse désignée dans l'espace d'adresse externe ; enfin, l'opération se termine.

14. Procédé de réalisation d'une opération vers l'avant d'un réseau neuronal convolutif multicouche, comprenant :
la réalisation du procédé selon l'une quelconque des revendications 9 à 13 sur chaque couche du réseau neuronal convolutif multicouche ;
après la réalisation d'une couche précédente du réseau neuronal convolutif, l'utilisation, par l'instruction d'opération d'une couche présente, de l'adresse de données de sortie de la couche précédente stockée dans l'unité d'opération maître (5) en tant que l'adresse de données d'entrée de la couche présente, et la modification de l'adresse du noyau de convolution et des données biaisées dans l'instruction en adresse correspondante.
